# FASCICULE DE BREVET EUROPEEN

(11) **EP 3 155 296 B1**
(45) Date de publication et mention de la délivrance du brevet: **04.04.2018**
(21) Numéro de dépôt: 15733798.1
(22) Date de dépôt: 04.06.2015
(51) Int. Cl.: F16H 55/06, B29C 39/02

(54) **PROCEDE DE FABRICATION EN MOULAGE ET SURMOULAGE D'UNE ROUE DENTEE A JANTE COULEE CANNELEE**
VERFAHREN ZUR HERSTELLUNG MITTELS SPRITZGIESSENS UND UMSPRITZENS EINES ZAHNRADES MIT EINER FELGE MIT RIPPEN
A PROCESS FOR MANUFACTURING BY INJECTION MOULDING AND OVERMOULDING A TOOTHED WHEEL WITH A RIM HAVING RIBS

(30) Priorité: 11.06.2014 FR 1455300
(43) Date de publication de la demande: 19.04.2017
(73) Titulaire: JTEKT Europe, 69540 Irigny (FR)
(72) Inventeur: BROCHOT, Patrice, 69600 Oullins (FR); REY, Laurent, 69100 Villeurbanne (FR)
(74) Mandataire: Chevalier, Renaud Philippe
(86) Numéro de dépôt international: PCT/FR2015/051481
(87) Numéro de publication internationale: WO 2015/189502

(56) Documents cités:
- DE-A1- 10 127 224
- DE-A1-102012 102 775
- GB-A- 1 113 945
- JP-A- 2004 204 902
- US-A- 3 114 598
- US-A1- 2006 027 294
- US-A1- 2007 214 642

## Description

La présente invention concerne le domaine général de la fabrication des roues destinées à assurer la transmission d'un couple au sein d'un mécanisme, et plus particulièrement le domaine de la fabrication des roues dentées destinées aux mécanismes de type engrenages.

La présente invention concerne plus particulièrement la fabrication des roues dentées destinées aux réducteurs de direction assistée pour véhicules automobiles.

On connaît déjà des procédés de fabrication de roues dentées par surmoulage, au cours desquels on introduit dans un moule un insert formant moyeu, puis l'on réalise, par surmoulage, une jante en matériau polymère autour dudit moyeu, voir par exemple DE 10 2012 102775. De tels procédés de fabrication peuvent toutefois présenter certains inconvénients.

En particulier, lors du surmoulage, le matériau polymère peut être exposé à des effets de cisaillement et d'auto-échauffement en son point d'injection, qui provoquent un sectionnement des chaînes polymères, de telle sorte que la jante finalement obtenue peut ne pas présenter une résistance mécanique, et notamment une ténacité, optimale.

Ensuite, l'opération de surmoulage de la jante peut nécessiter, notamment afin de limiter les effets de cisaillement susmentionnés, des descentes de coulée de volume particulièrement important, ce qui conduit à une surconsommation de matière première et d'énergie.

En outre, il peut être difficile de réaliser une jonction satisfaisante entre l'insert formant moyeu et la jante obtenue par surmoulage, et notamment une jonction qui résiste parfaitement aux efforts de cisaillement en torsion induits par le couple que transmet la roue.

A ce titre, la création, sur l'insert formant moyeu, de reliefs d'accroche de formes complexes, destinés à être mouillés par le matériau constitutif de la jante, peut compliquer la fabrication dudit insert.

Enfin, l'utilisation d'un moyeu métallique de grand diamètre, pour soutenir la jante, tend à augmenter le poids de la roue obtenue.

Les objets assignés à l'invention visent par conséquent à remédier aux inconvénients susmentionnés et à proposer un nouveau procédé de fabrication de roue, et notamment de roue dentée, qui permette d'obtenir de manière simple, rapide et peu onéreuse une roue qui soit à la fois légère et particulièrement robuste.

Les objets assignés à l'invention sont atteints au moyen d'un procédé de fabrication d'une roue comprenant une étape (a) de fabrication d'une préforme tubulaire, au cours de laquelle on coule dans un premier moule un liquide à polymériser et on polymérise ledit liquide dans ledit premier moule de manière à le solidifier en une préforme tubulaire, d'axe directeur (XX'), le premier moule comprenant un noyau central, qui est centré sur l'axe directeur (XX') et qui permet de former l'alésage central de la préforme tubulaire, ainsi que des noyaux de modelage agencés sensiblement parallèlement à l'axe directeur (XX') de manière à ménager dans l'épaisseur radiale de la préforme tubulaire des évidements qui s'étendent axialement selon la longueur de ladite préforme tubulaire, ledit procédé comprenant ensuite une étape (b) de débitage, au cours de laquelle on débite la préforme tubulaire sensiblement perpendiculairement à son axe directeur (XX'), et de façon sécante aux évidements, de manière à obtenir un tronçon de préforme tubulaire formant une jante, puis une étape (d) de surmoulage au cours de laquelle on place ladite jante dans un second moule, de façon concentrique à un organe de support central, tel qu'une douille ou un arbre, qui matérialise l'axe de rotation (X₁, X₁') de la roue à former, et l'on injecte, dans l'espace interstitiel qui est radialement compris entre ledit organe de support central et la jante, un matériau de remplissage polymère de sorte que ledit matériau de remplissage mouille ledit organe de support central et pénètre dans les évidements de la jante, et crée ainsi, lorsqu'il se solidifie, un disque intermédiaire qui assure la fixation de la jante à l'organe de support central.

Avantageusement, la réalisation d'une préforme tubulaire par coulage, en introduisant dans le premier moule le ou les précurseurs du matériau polymère destiné à constituer ladite préforme (et donc les jantes issues de ladite préforme), on crée les chaînes polymères directement dans le premier moule, sans les malmener et en particulier sans les exposer à des échauffements importants ou à des efforts de cisaillement.

La préforme tubulaire, et par conséquents les jantes qui en sont tirées, sont donc constituées d'un polymère à chaînes longues, à l'intégrité préservée, ce qui leur confère une excellente résistance mécanique, et en particulier une bonne ténacité.

La robustesse et la longévité de la roue s'en trouvent donc accrues.

En outre, la préparation en une pièce d'une préforme tubulaire dans laquelle on peut découper plusieurs jantes permet de (pré)fabriquer lesdites jantes par séries (par lots), en une seule coulée, ce qui procure un gain de temps et d'énergie.

A ce titre, dans la mesure où l'on peut librement choisir la longueur du tronçon que l'on découpe, c'est-à-dire que l'on peut librement choisir la hauteur axiale de chaque jante issue de la préforme, une même préforme tubulaire pourra servir à la production de jantes de hauteurs différentes, ce qui rend le procédé particulièrement polyvalent, bien que standardisé pour la fabrication par coulage de la préforme tubulaire.

Avantageusement, la réalisation d'une pluralité d'évidements selon l'invention, dès le moulage initial de la préforme tubulaire au stade de l'étape (a), permet de préformer à même la jante, de manière simple et rapide, au moyen de noyaux de modelage de forme relativement simple et facilement démoulables (et donc au moyen d'un premier moule relativement simple à fabriquer et à mettre en oeuvre), des reliefs d'accrochage qui permettront ensuite une fixation efficace de ladite jante sur la roue lors de l'étape (c) de surmoulage, reliefs d'accrochage qui assureront notamment une bonne tenue aux couples de torsion.

On peut ainsi concilier la simplicité de l'outillage avec l'efficacité mécanique des formes de jante obtenues.

Par ailleurs, l'utilisation de matériaux polymères, et plus particulièrement de matériaux polymères thermoplastiques, pour réaliser tant la jante que le disque intermédiaire formant les rayons de la roue, permet d'obtenir une roue particulièrement légère.

En outre, l'utilisation d'une jonction par un disque intermédiaire surmoulé permet au besoin de différencier le premier matériau polymère constitutif de la jante du second matériau polymère (de remplissage) constitutif du disque intermédiaire, et ainsi d'adapter les propriétés mécaniques de la roue en fonction de sa destination.

Ainsi on pourra par exemple combiner facilement un disque intermédiaire formant une infrastructure particulièrement rigide, par exemple en matériau composite comprenant une matrice polymère contenant des fibres de renfort, du type fibres de verre, de carbone, ou d'aramide, avec une jante relativement (plus) souple, réalisée par exemple dans un matériau polymère non fibré, de manière à améliorer la qualité de l'engrènement et la répartition au sein de la roue des efforts transmis par le mécanisme auquel ladite roue est intégrée.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective, une préforme tubulaire réalisée selon l'invention.
La figure 2 illustre, selon une vue en perspective, un tronçon débité dans la préforme de la figure 1 et destiné à former une jante.
La figure 3 illustre, selon une vue en coupe axiale, le tronçon de la figure 2.
La figure 4 illustre, selon une vue en coupe axiale, le rainurage circulaire du tronçon de la figure 2, permettant de créer des reliefs d'accrochage étranglés en queues d'aronde.
Les figures 5 et 6 illustrent, selon des vues en coupe axiale, la mise en place de la jante dans le second moule et l'opération de surmoulage permettant de former le disque intermédiaire qui relie la jante à l'organe de support central.
La figure 7 illustre, selon une vue d'ensemble en coupe axiale, un exemple de roue obtenue par le procédé selon l'invention, et plus particulièrement un exemple de sous-ensemble obtenu en emmanchant sur un arbre la roue de la figure 6.
Les figures 8 à 11 illustrent, selon des vues en section transverse à l'axe directeur (XX'), différentes variantes de réalisation de préformes tubulaires (et donc de jantes) selon l'invention, présentant des évidements de types différents.

La présente invention concerne un procédé de fabrication d'une roue 1, et plus particulièrement d'une roue 1 dentée.

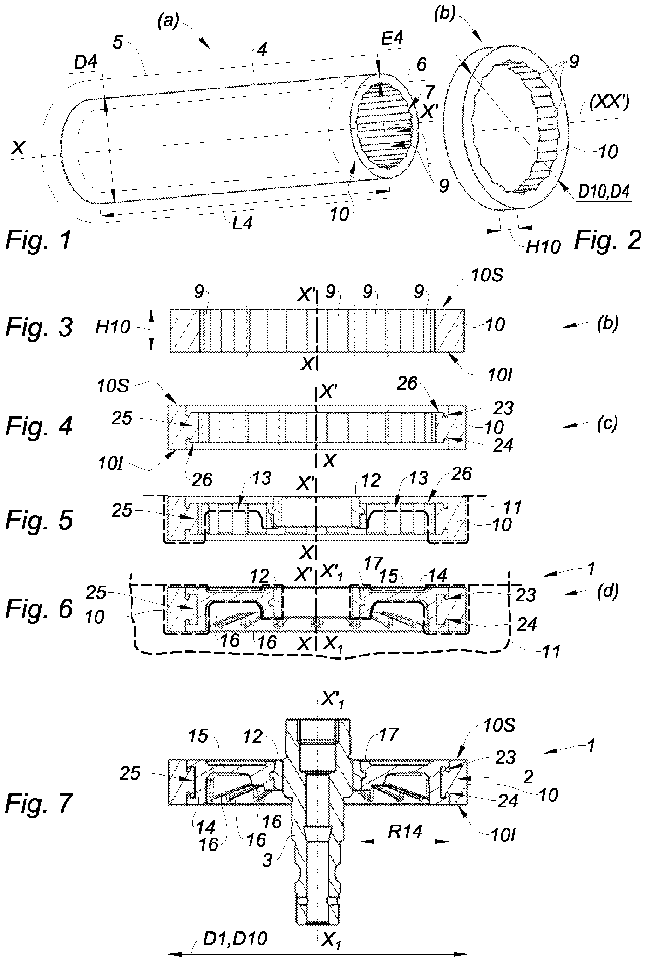

Ladite roue 1 dentée pourra notamment être une roue de réducteur à engrenage, et plus particulièrement, tel que cela est illustré sur la figure 7, une roue de réducteur pour direction assistée.

A ce titre, la roue 1 pourra par exemple former une roue tangente destinée à être entraînée par une vis sans fin.

La roue dentée 1 pourra présenter tout type de dents d'engrènement 2 (non détaillées sur les figures), par exemple formant une denture droite, une denture hélicoïdale, ou une denture en chevrons.

Tel que cela est illustré sur la figure 7, la roue 1 sera avantageusement fixée à un arbre 3, de préférence métallique, qui matérialise l'axe de rotation (X₁, X₁') de ladite roue.

Ledit arbre 3 comprendra de préférence, par exemple à l'une de ses extrémités, un pignon lui permettant de venir en prise avec une autre pièce dentée, telle qu'une colonne de direction ou une crémaillère.

Par ailleurs, bien que l'invention ne soit pas limitée à une roue 1 de dimensions particulières, on notera que, dans le cadre notamment d'une roue 1 destinée à un réducteur de direction assistée, le diamètre hors-tout D1 de ladite roue 1 pourra être sensiblement compris entre 3 cm et 20 cm, plus particulièrement entre 5 cm et 15 cm, et de préférence égal à 10 cm.

Selon l'invention, le procédé comprend une étape (a) de fabrication d'une préforme tubulaire 4, au cours de laquelle on coule dans un premier moule 5 un liquide à polymériser et on polymérise ledit liquide dans ledit premier moule 5 de manière à le solidifier en une préforme tubulaire 4, d'axe directeur (XX'), tel que cela est illustré sur la figure 1.

Contrairement aux procédés de moulage par injection ou par extrusion, qui refondent un polymère déjà constitué, mais tendent à en dégrader les chaînes, la fabrication par coulage de la préforme tubulaire 4 selon l'invention revient à placer dans le premier moule 5 un bain contenant le ou les précurseur(s) du (premier) matériau polymère constitutif de la préforme tubulaire, de sorte à ce que la polymérisation, c'est-à-dire la constitution des chaînes polymères dudit premier matériau, soit opérée directement au sein du premier moule 5, sans subir notamment de contraintes de cisaillement.

Le premier matériau polymère, constitutif de la préforme tubulaire 4, peut donc être obtenu en synthétisant des chaînes polymères de grande taille, particulièrement résistantes.

Tel que cela est illustré sur les figures 1 et 8 à 11, le premier moule 5 comprend un noyau central 6, qui est centré sur l'axe directeur (XX') et qui permet de former l'alésage central 7 de la préforme tubulaire, ainsi que des noyaux de modelage 8 agencés sensiblement parallèlement à l'axe directeur (XX') de manière à ménager dans l'épaisseur radiale E4 de la préforme tubulaire 4 des évidements 9 qui s'étendent axialement selon la longueur L4 de ladite préforme tubulaire 4.

Avantageusement, le procédé permet ainsi de former directement, lors de la synthèse du matériau polymère constitutif de la préforme tubulaire 4, les évidements 9 qui serviront à renforcer la tenue, notamment en torsion, de la jante sur le moyeu de la roue, les noyaux de modelage 8 servant à réserver les espaces correspondant auxdits évidements 9.

Ainsi, les chaînes polymères de grande taille obtenues par coulage peuvent être synthétisées directement autour (et au contact) des noyaux (du noyau central 6 et, surtout, des noyaux de modelage 8), si bien que lesdites chaînes peuvent épouser les formes desdits noyaux 6, 8 sans s'interrompre.

De la sorte, la préforme tubulaire 4, et par conséquent la jante 10 qui en sera tirée, présentera avantageusement une structure particulièrement robuste, relativement homogène, et peu sujette aux concentrations de contrainte ou aux amorces de rupture, y compris au voisinage immédiat des évidements 9.

De préférence, les noyaux de modelage 8 (ainsi que le noyau central 6) seront sensiblement rectilignes, aux angles dépouille près, et alignés parallèlement à l'axe directeur (XX'), de sorte notamment à permettre un démoulage axial facile de la préforme tubulaire 4.

En outre, les noyaux de modelage 8 (ainsi que le noyau central 6) s'étendront de préférence sur la majorité de la longueur L4 de la préforme tubulaire 4, et préférentiellement sur la totalité de la longueur L4 de la préforme tubulaire 4, de sorte à ce que les évidements 9, et plus particulièrement chaque évidement 9, traverse(nt) axialement la préforme tubulaire 4 de part en part, en continu.

Un tel agencement d'une part simplifie les opérations de mise en place de noyaux 6, 8 ainsi que le démoulage, et d'autre part rend la totalité de la préforme tubulaire 4 exploitable pour former des jantes 10, sans perte de matière (puisqu'il est possible de couper en n'importe quel point de la longueur de la préforme 4 un tronçon comprenant tous les évidements 9 utiles).

Selon l'invention, le procédé comprend ensuite, après l'étape (a) de fabrication de la préforme tubulaire 4, une étape (b) de débitage, au cours de laquelle on débite, par exemple par sciage ou découpe au jet d'eau, la préforme tubulaire 4 sensiblement perpendiculairement à son axe directeur (XX'), et de façon sécante aux évidements 9, tel que cela est illustré en trait pointillé sur la figure 1, de manière à obtenir un tronçon de préforme tubulaire formant une jante 10, tel que cela est illustré sur les figures 1 à 3.

En d'autres termes, la préforme tubulaire 4 formera avantageusement un brut qui pourra être débité en plusieurs tranches, annulaires, qui seront destinées chacune à former une jante 10.

A ce titre, on notera que la longueur L4 de la préforme tubulaire 4 permet avantageusement d'obtenir au moins deux, au moins trois, au moins cinq, voire au moins dix ou vingt jantes 10, et par exemple entre vingt et quarante jantes 10, à partir d'une seule et même préforme tubulaire 4.

A cet effet, la longueur L4 de la préforme tubulaire 4 sera de préférence supérieure, et par exemple deux fois à trois fois (voire quatre fois) supérieure, au diamètre hors-tout D4 de ladite préforme 4 (qui correspond de préférence sensiblement au diamètre hors-tout D10 de la jante, et au diamètre D1 de la roue 1 finie).

A titre indicatif la longueur L4 de la préforme brute 4 (exploitable, c'est-à-dire comprenant des évidements 9), pourra être sensiblement comprise entre 20 cm et 50 cm, et par exemple de l'ordre de 40 cm, tandis que la hauteur (axiale) unitaire H10 de la jante 10 pourra être comprise entre 10 mm et 20 mm (ce qui permettra, dans le cas d'une préforme de 40 cm, de débiter respectivement 20 à 40 jantes 10).

On notera par ailleurs que, avantageusement, l'opération de débitage de la jante n'est susceptible d'interrompre des chaînes polymères qu'au niveau des plans de coupe, c'est-à-dire au niveau des chants supérieur 10S et inférieur 10I de la jante 10 créés par l'outil de découpe, et si bien que ladite opération de débitage n'affecte aucunement la longueur des chaînes polymères profondes situées dans la masse de la jante 10 ou sur les autres surfaces de cette dernière, et notamment la longueur des chaînes polymères délimitant les contours des évidements 9.

La jante obtenue 10 est et reste donc particulièrement solide.

Le procédé selon l'invention comprend ensuite, tel que cela est illustré sur les figures 5 et 6, une étape (d) de surmoulage au cours de laquelle on place la jante 10 dans un second moule 11 (figure 5), de façon concentrique à un organe de support central 12, 3, tel qu'une douille 12 ou (directement) un arbre 3, qui matérialise l'axe de rotation (X₁, X₁') de la roue 1 à former, et l'on injecte, dans l'espace interstitiel 13 qui est radialement compris entre ledit organe de support central 12, 3 et la jante 10, un matériau de remplissage polymère de sorte que ledit matériau de remplissage mouille ledit organe de support central 12, 3 et pénètre dans les évidements 9 de la jante 10, et crée ainsi, lorsqu'il se solidifie, un disque intermédiaire 14 (figures 6 et 7) qui assure la fixation de la jante 10 à l'organe de support central 12, 3.

De préférence, le (second) matériau polymère utilisé comme matériau de remplissage pour former le disque intermédiaire 14 sera un polymère thermoplastique, permettant un surmoulage par injection à chaud, à température supérieure à la température ambiante.

L'utilisation d'un procédé de surmoulage permettra de réaliser de manière simple, rapide et reproductible, et de préférence d'un seul tenant, le disque intermédiaire 14, tout en assurant son ancrage intime avec la jante 10 et l'organe central 12, 3, du fait notamment que le matériau de remplissage, lorsqu'il est à l'état fluide (liquide), pénètre aisément dans le creux des évidements 9 et remplit ces derniers.

Le disque intermédiaire 14 formera avantageusement à la fois un moyeu et les rayons de la roue 1.

Le disque intermédiaire 14 pourra comporter à cet effet d'une part un moyeu 17 sensiblement cylindrique qui enveloppe l'organe de support central 12, 3, et d'autre part une collerette 15, de préférence pleine, et préférentiellement sensiblement normale à l'axe de rotation (X₁, X₁') de la roue, qui forme un pont qui raccorde la surface radialement externe de l'organe de support central 12, 3, et plus particulièrement le moyeu 17 (avec lequel ladite collerette 15 est venue de manière), à la surface radialement interne de la jante 10.

La collerette 15 matérialisera ainsi l'équivalent des rayons de la roue 1.

La collerette 15 pourra avantageusement être renforcée par des nervures 16, de préférence orientées sensiblement radialement, tel que cela est illustré sur les figures 6 et 7.

A ce titre, la collerette 15 pourra comporter préférentiellement des nervures 16 de renfort sur sa face (axialement) inférieure, voire exclusivement sur ladite face inférieure, tel que cela est illustré sur la figure 7.

Toutefois, il est parfaitement envisageable, sans sortir du cadre de l'invention, que la collerette 15 comporte des nervures 16 de renfort sur sa face (axialement) supérieure, voire sur ses deux faces, supérieure et inférieure.

A titre indicatif, afin d'alléger au mieux la roue 1, le cas échéant en minimisant le volume de ladite roue occupé par la douille 12 métallique, l'étendue radiale R14 du disque intermédiaire 14 (qui correspond de préférence à l'étendue radiale de l'espace interstitiel 13), considérée entre l'axe directeur (XX') et la jante 10, représentera au moins 20 %, de préférence au moins 30 % voire au moins 40 %, et par exemple entre 40 % et 70 % voire 80 % du rayon D1/2 de la roue 1.

Dans cette même volonté d'allègement, le diamètre de l'organe de support central 12, 3 pourra quant à lui représenter moins de 50 %, et par exemple entre 20 % et 35 % du diamètre D1 de la roue 1.

Comme indiqué plus haut, l'organe de support central pourra être formé par une douille 12, de préférence métallique, qui sera avantageusement destinée à être enfilée sur un arbre 3, et fixée sur ledit arbre, par exemple par emmanchement, tel que cela est illustré sur les figures 5 à 7.

Toutefois, selon une variante particulièrement avantageuse de réalisation, l'organe de support central sera formé directement par l'arbre 3, de préférence métallique, de la roue 1, l'étape (d) de surmoulage s'effectuant alors directement sur ledit arbre 3, de manière à ce que le disque intermédiaire 14 vienne mouiller, et s'accrocher directement à, la surface dudit arbre 3. Pour visualiser une telle variante, il suffirait de substituer l'arbre 3 à la douille 12 sur les figures 5 à 7.

Par ailleurs, on notera que l'axe de rotation (X₁, X₁') de la roue 1 est en pratique confondu avec l'axe directeur (XX') de la jante 10, et donc de la préforme tubulaire 4, tel que cela est notamment visible sur la figure 6.

Par commodité de description, on pourra donc assimiler ces deux axes.

En outre, on désignera par « axiale » une direction ou une dimension considérée selon l'axe directeur (XX'), respectivement (X₁, X₁'), ou parallèlement à ce dernier, et par « radiale » une direction ou une dimension considérée transversalement, et plus particulièrement perpendiculairement, audit axe directeur (XX'), (X₁, X₁').

De préférence, le procédé comporte une étape (e) de taillage de dents d'engrènement, postérieure à l'étape (d) de surmoulage, au cours de laquelle on taille des dents d'engrènement 2 dans l'épaisseur radiale de la jante 10 (correspondant ici à l'épaisseur radiale E4 de la préforme tubulaire 4).

Avantageusement, en taillant les dents d'engrènement *a posteriori,* après avoir fini de mouler la roue 1, et alors que l'axe de rotation (X₁, X₁') effectif de la roue 1 est déjà matérialisé par la douille 12, ou de préférence par l'arbre 3, sur laquelle (lequel) ladite roue 1 est fixée, si bien que ladite douille 12, respectivement ledit arbre 3, forme une référence pour la machine de taillage, on pourra éviter tout défaut de circularité et de concentricité entre le diamètre primitif des dents 2 obtenues par taillage et ledit axe effectif de rotation (X₁, X1').

Selon une possibilité de mise en oeuvre du procédé, applicable notamment aux configurations des figures 1, 8, 9 et 10, on pourra utiliser, lors de l'étape (a) de fabrication de la préforme tubulaire, des noyaux de modelage 8 qui sont formés d'un seul tenant avec le noyau central 6, de telle sorte que les évidements 9 correspondants prennent la forme de cannelures 20 creusées dans la surface radialement interne de la préforme tubulaire 4, et qui s'ouvrent radialement sur l'alésage central 7 de ladite préforme tubulaire 4.

Cette variante de mise en oeuvre simplifiera avantageusement l'outillage de coulage, grâce à l'emploi d'un noyau unique, monolithique, qui regroupera le noyau central 6 et des noyaux de modelage 8 intégrés, portés par ledit noyau central 6, noyaux de modelage 8 qui formeront ainsi des empreintes mâles radialement saillantes sur ledit noyau central 6.

La jante 10 ainsi obtenue présentera donc des évidements 9 de type indentations, de préférence équiréparties en étoile autour de l'axe directeur (XX'), qui serviront de reliefs d'accrochage en torsion.

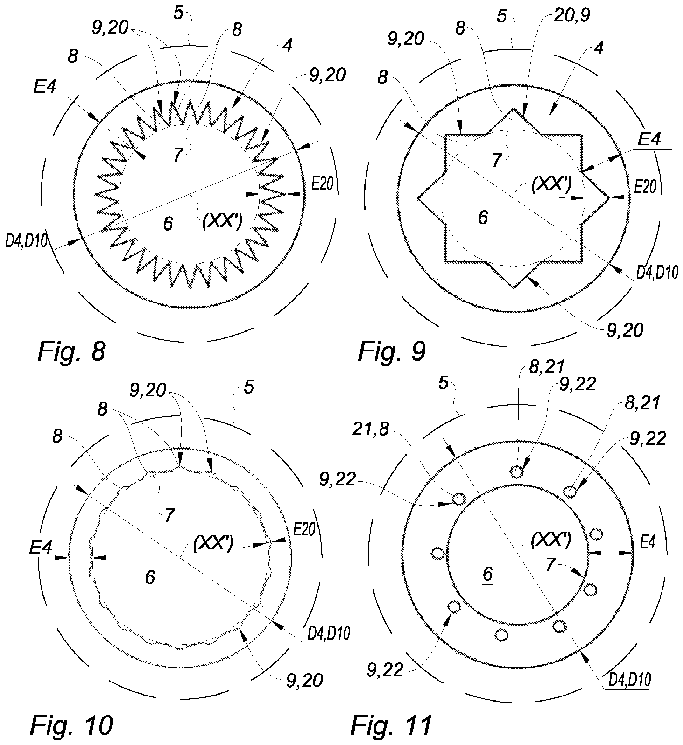

Le profil de pénétration des évidements 9, considéré dans un plan de coupe normal à l'axe directeur (XX'), pourra notamment être du type « pointe » triangulaire (figures 8 et 9), obtenu par des lignes brisées qui se rejoignent en un sommet formant le point le plus pénétrant dans l'épaisseur E4 de la jante 10, ou bien encore du type « arche », le fond de chaque évidement 9 étant délimité par une ligne incurvée formant cuvette (figure 10).

La profondeur de pénétration radiale E20 des cannelures 20 pourra être comprise entre 0,5 mm et 3 mm et/ou entre 0,5 % et 3 % du diamètre hors-tout D10 de la jante 10.

Un tel dimensionnement permettra en effet d'obtenir un ancrage efficace, notamment à l'encontre des efforts de torsion, sans pour autant fragiliser la jante 10, et en particulier sa denture d'engrènement.

Selon une autre possibilité de mise en oeuvre, qui pourra être alternative ou complémentaire à la précédente (concernant la formation de cannelures 20), on pourra utiliser, lors de l'étape (a) de fabrication de la préforme tubulaire 4, des noyaux de modelage 8 qui sont formés par des tiges déportées 21, distinctes du noyau central 6 et qui s'étendent parallèlement à l'axe directeur (XX'), à distance radiale dudit noyau central 6, de sorte que les évidements 9 correspondants prennent la forme de canaux fermés 22, intégrés à l'épaisseur radiale E4 de la préforme tubulaire 4, tel que cela est illustré sur la figure 11.

Les évidements 9 sont ainsi formés par des passages cylindriques, de préférence de base circulaire, de type trous débouchants, percés en déport de l'alésage central 7 (ici selon un cercle de répartition de diamètre supérieur à celui de l'alésage 7), de telle sorte que lesdits canaux 22 sont séparés radialement dudit alésage 7 par une portion de l'épaisseur radiale E4 de la préforme tubulaire 4 (et donc de la jante 10).

Une telle configuration permettra notamment de renforcer également l'ancrage axial de la jante 10 sur le disque intermédiaire 14, en sus de l'accrochage en torsion.

De préférence, le procédé comprend, après l'étape (b) de débitage et avant l'étape (d) de surmoulage, une étape (c) de rainurage circulaire au cours de laquelle on réalise, sur le chant axialement supérieur 10S et/ou sur le chant axialement inférieur 10I de la jante 10 une rainure circulaire 23, respectivement 24, centrée sur l'axe directeur (XX') et sécante aux évidements 9, tel que cela est illustré sur la figure 4.

Le creusement de la ou des rainures circulaires 23, 24 pourra avantageusement être réalisé de manière simple et rapide par enlèvement de matière, selon un mouvement de pénétration axiale, au moyen d'un outil de coupe, du genre fraise ou trépan (scie-cloche) de diamètre adapté.

Avantageusement, la ou les rainures circulaires 23, 24 viendront compléter et améliorer la forme initiale des évidements 9 de manière à conférer à ces derniers une capacité d'accrochage radial.

Plus particulièrement, chaque rainure circulaire 23, 24 reliera de préférence les différents évidements 9 entre eux, en formant ainsi un canal circulaire de communication (faisant communiquer entre eux lesdits évidements), creusé dans la hauteur axiale H10 de la jante, centré sur l'axe directeur (XX'), et situé radialement au-delà de la limite de l'alésage interne 7.

De la sorte, le remplissage de ladite rainure circulaire 23, 24 par le (second) matériau de remplissage, lors de l'étape (d) de surmoulage, permettra de créer, tel que cela est illustré sur les figures 6 et 7, une couronne d'ancrage procurant un effet de cerclage, et donc à la fois un effet de retenue radiale de la jante 10 sur le disque intermédiaire 14 d'une part, et un effet de rigidification sous-jacente de la jante 10, ainsi qu'un effet de rigidification de la liaison entre ladite jante 10 et le bord radialement externe dudit disque intermédiaire 14, d'autre part.

En d'autres termes, la ou les rainures circulaires 23, 24 sont de préférence contenues radialement au-delà de la limite radialement interne de la jante 10 (limite de l'alésage interne 7), de sorte à former dans la jante 10, en section transverse contenant l'axe directeur (XX'), des reliefs d'accrochage étranglés 25, tels que des queues d'aronde, qui améliorent l'ancrage radial du disque intermédiaire 14 à la jante 10 (et réciproquement), tel que cela est notamment visible sur les figures 4 à 7.

Les rainures 23, 24 définissent en effet dans la jante 10 un étranglement de type col, axialement plus étroit que la « tête » radialement interne de ladite jante 10 qui délimite l'alésage interne 7, ce qui permet au disque intermédiaire 14 d'agir comme un mors de retenue (ici en « C ») à l'encontre de la jante 10.

En définitive, l'invention permet de créer, en peu d'opérations du reste relativement simples et rapides, des reliefs d'accrochage double permettant d'une part un ancrage en torsion (rotation) grâce à la pénétration des évidements 9 au-delà de l'enveloppe radialement interne de l'alésage interne 7, et d'autre part un ancrage radial (notamment centrifuge) grâce aux rainures de cerclages 23, 24 (en complément, le cas échéant, de l'ancrage radial qui peut être déjà procuré dans une configuration selon laquelle le matériau de remplissage passe dans les canaux fermés 22, et exerce donc une retenue radiale à l'encontre de l'épaisseur de jante 10 résiduelle comprise entre l'alésage interne 7 et lesdits canaux fermés 22).

On notera par ailleurs que, pour faciliter l'accès du matériau de remplissage aux rainures circulaires 23, 24, et pour permettre le cas échéant de former le disque intermédiaire 14 dans un espace axialement contenu dans la hauteur axiale H10 de la jante 10 afin d'obtenir une roue 1 compacte (le disque intermédiaire 14 pouvant par exemple affleurer les chants supérieur 10S et inférieur 10I de la jante, tel que cela est illustré sur les figures 6 et 7), l'étape (c) de rainurage pourra être accompagnée de la réalisation d'un lamage 26 permettant de creuser axialement une dépression depuis le chant 10S, 10I de la jante 10, tel que cela est visible sur les figures 4 et 5.

De préférence, le (premier) matériau constitutif de la préforme tubulaire 4, et donc de la jante 10, sera un polyamide, préférentiellement du polyamide 6.

Un tel matériau allie en effet résistance mécanique et chimique (notamment vis-à-vis des lubrifiants) avec une certaine souplesse qui sera utile à la qualité de l'engrènement des dents 2 avec le reste du mécanisme auquel est intégré la roue 1.

Bien entendu, l'invention n'est nullement limitée aux seules variantes de réalisation décrites dans ce qui précède, l'homme du métier étant notamment à même d'isoler ou de combiner librement entre elles l'une ou l'autre des caractéristiques susmentionnées, ou encore de leur substituer des équivalents.

L'invention concerne en outre bien entendu en tant que telle une roue 1, et notamment une roue de réducteur à engrenage, obtenue selon le procédé décrit ci-dessus.

## Revendications

1. Procédé de fabrication d'une roue (1) comprenant une étape (a) de fabrication d'une préforme tubulaire (4), au cours de laquelle on coule dans un premier moule (5) un liquide à polymériser et on polymérise ledit liquide dans ledit premier moule (5) de manière à le solidifier en une préforme tubulaire (4), d'axe directeur (XX'), le premier moule (5) comprenant un noyau central (6), qui est centré sur l'axe directeur (XX') et qui permet de former l'alésage central (7) de la préforme tubulaire (4), ainsi que des noyaux de modelage (8) agencés sensiblement parallèlement à l'axe directeur (XX') de manière à ménager dans l'épaisseur radiale (E4) de la préforme tubulaire des évidements (9) qui s'étendent axialement selon la longueur (L4) de ladite préforme tubulaire, ledit procédé comprenant ensuite une étape (b) de débitage, au cours de laquelle on débite la préforme tubulaire (4) sensiblement perpendiculairement à son axe directeur (XX'), et de façon sécante aux évidements (9), de manière à obtenir un tronçon de préforme tubulaire formant une jante (10), puis une étape (d) de surmoulage au cours de laquelle on place ladite jante (10) dans un second moule (11), de façon concentrique à un organe de support central (12, 3), tel qu'une douille (12) ou un arbre (3), qui matérialise l'axe de rotation (X₁, X₁') de la roue (1) à former, et l'on injecte, dans l'espace interstitiel (13) qui est radialement compris entre ledit organe de support central (12, 3) et la jante (10), un matériau de remplissage polymère de sorte que ledit matériau de remplissage mouille ledit organe de support central (12, 3) et pénètre dans les évidements (9) de la jante (10), et crée ainsi, lorsqu'il se solidifie, un disque intermédiaire (14) qui assure la fixation de la jante (10) à l'organe de support central (12, 3).

2. Procédé selon la revendication 1 **caractérisé en ce que**, lors de l'étape (a) de fabrication de la préforme tubulaire, on utilise des noyaux de modelage (8) qui sont formés d'un seul tenant avec le noyau central (6), de telle sorte que les évidements (9) correspondants prennent la forme de cannelures (20) creusées dans la surface radialement interne de la préforme tubulaire (4), et qui s'ouvrent radialement sur l'alésage central (7) de ladite préforme tubulaire.

3. Procédé selon la revendication 2 **caractérisé en ce que** la profondeur de pénétration radiale (E20) des cannelures (20) est comprise entre 0,5 mm et 3 mm et/ou entre 0,5 % et 3 % du diamètre hors-tout (D10) de la jante (10).

4. Procédé selon l'une des revendications 1 à 3 **caractérisé en ce que**, lors de l'étape (a) de fabrication de la préforme tubulaire (4), on utilise des noyaux de modelage (8) qui sont formés par des tiges déportées (21), distinctes du noyau central (6) et qui s'étendent parallèlement à l'axe directeur (XX'), à distance radiale dudit noyau central (6), de sorte que les évidements (9) correspondants prennent la forme de canaux fermés (22), intégrés à l'épaisseur radiale (E4) de la préforme tubulaire.

5. Procédé selon l'une des revendications précédentes **caractérisé en ce qu'**il comprend, après l'étape (b) de débitage et avant l'étape (d) de surmoulage, une étape (c) de rainurage circulaire au cours de laquelle on réalise, sur le chant axialement supérieur (10S) et/ou sur le chant axialement inférieur (10I) de la jante (10) une rainure circulaire (23, 24), centrée sur l'axe directeur (XX') et sécante aux évidements (9).

6. Procédé selon la revendication 5 **caractérisé en ce que** la ou les rainures circulaires (23, 24) sont contenues radialement au-delà de la limite radialement interne de la jante (10), de sorte à former dans la jante (10), en section transverse contenant l'axe directeur (XX'), des reliefs d'accrochage étranglés (25), tels que des queues d'aronde, qui améliorent l'ancrage radial du disque intermédiaire (14) à la jante (10).

7. Procédé selon l'une des revendications précédentes **caractérisé en ce qu'**il comporte une étape (e) de taillage de dents d'engrènement, postérieure à l'étape (d) de surmoulage, au cours de laquelle on taille des dents d'engrènement (2) dans l'épaisseur radiale (E4) de la jante (10).

8. Procédé selon l'une des revendications précédentes **caractérisé en ce que** le matériau constitutif de la préforme tubulaire (4) est un polyamide, de préférence du polyamide 6.

## Patentansprüche

1. Herstellungsverfahren eines Rads (1), das einen Schritt (a) des Herstellens einer röhrenförmigen Vorform (4) umfasst, in dessen Verlauf man in eine erste Form (5) eine zu polymerisierende Flüssigkeit gießt, und man die Flüssigkeit in der ersten Form (5) derart polymerisiert, dass sie sich in eine röhrenförmige Vorform (4) mit Steuerachse (XX') verfestigt, wobei die erste Form (5) einen zentralen Kern (6) umfasst, der auf der Steuerachse (XX') zentriert ist und es erlaubt, die zentrale Bohrung (7) der röhrenförmigen Vorform (4) sowie Modellierungskerne (8) zu bilden, die im Wesentlichen parallel zu der Steuerachse (XX') derart eingerichtet sind, dass in der radialen Stärke (E4) der röhrenförmigen Vorform Aussparungen (9) geschaffen werden, die sich axial entlang der Länge (L4) der röhrenförmigen Vorform erstrecken, wobei das Verfahren anschließend einen Schritt (b) des Zurechtschneidens umfasst, in dessen Verlauf man die röhrenförmige Vorform (4) im Wesentlichen senkrecht zu ihrer Steuerachse (XX') und zu den Aussparungen (9) schneidend derart zuschneidet, dass man einen röhrenförmigen Vorformabschnitt, der eine Felge (10) bildet, erhält, dann einen Überformungsschritt (d), in dessen Verlauf man die Felge (10) in eine zweite Form (11) konzentrisch zu einem zentralen Tragorgan (12, 3), wie einer Hülse (12) oder einer Welle (3) platziert, die die Rotationsachse (X₁, X₁') des zu bildenden Rads (1) verkörpert, und man in den Zwischenraum (13), der radial zwischen dem zentralen Tragorgan (12, 3) und der Felge (10) liegt, ein Polymerfüllmaterial derart einspritzt, dass das Füllmaterial das zentrale Tragorgan (12, 3) benetzt und in die Aussparungen (9) der Felge (10) eindringt und daher, wenn es sich verfestigt, eine Zwischenscheibe (14) schafft, die das Befestigen der Felge (10) an dem zentralen Tragorgan (12, 3) sicherstellt.

2. Verfahren nach Anspruch 1, **dadurch gekennzeichnet, dass** man bei dem Fertigungsschritt (a) der röhrenförmigen Vorform Modellierungskerne (8) verwendet, die aus einem Stück mit dem zentralen Kern (6) derart gebildet sind, dass die entsprechenden Aussparungen (9) die Form von Auskehlungen (20) annehmen, die in der radial inneren Fläche der röhrenförmigen Vorform (4) ausgekehlt sind, und die sich radial auf der zentralen Bohrung (7) der röhrenförmigen Vorform öffnen.

3. Verfahren nach Anspruch 2, **dadurch gekennzeichnet, dass** die radiale Eindringtiefe (E20) der Auskehlungen (20) zwischen 0,5 mm und 3 mm und/oder zwischen 0,5 % und 3 % des Baudurchmessers (D10) der Felge (10) liegt.

4. Verfahren nach einem der Ansprüche 1 bis 3, **dadurch gekennzeichnet, dass** man bei dem Fertigungsschritt (a) der röhrenförmigen Vorform (4) Modellierungskerne (8) verwendet, die aus versetzten Schäften (21) gebildet sind, die von dem zentralen Kern (6) getrennt sind und sich parallel zu der Steuerachse (XX') in radialer Entfernung von dem zentralen Kern (6) derart erstrecken, dass die entsprechenden Aussparungen (9) die Form geschlossener Kanäle (22) annehmen, die in die radiale Stärke (E4) der röhrenförmigen Vorform integriert sind.

5. Verfahren nach einem der vorhergehenden Ansprüche, **dadurch gekennzeichnet, dass** es nach dem Schritt des Zurechtschneidens (b) und vor dem Überformungsschritt (d) einen kreisförmigen Riffelungsschritt (c) umfasst, in dessen Verlauf man auf der axial oberen Kante (10S) und/oder auf der axial unteren Kante (101) der Felge (10) eine kreisförmige Rille (23, 24) herstellt, die auf der Steuerachse (XX') zentriert ist und die Aussparungen (9) schneidet.

6. Verfahren nach Anspruch 5, **dadurch gekennzeichnet, dass** die kreisförmige(n) Rille(n) (23, 24) radial über das radial innere Limit der Felge (10) derart gefasst sind, dass sie in der Felge (10) im Querschnitt, der die Steuerachse (XX') enthält, eingeschnürte Verankerungsreliefs (25) wie Schwalbenschwänze bilden, die die radiale Verankerung der Zwischenscheibe (14) an der Felge (10) verbessern.

7. Verfahren nach einem der vorhergehenden Ansprüche, **dadurch gekennzeichnet, dass** es einen Schritt (e) des Schneidens von Eingriffszähnen nach dem Überformungsschritt (d) umfasst, in dessen Verlauf man Eingriffszähne (2) in die radiale Stärke (E4) der Felge (10) schneidet.

8. Verfahren nach einem der vorhergehenden Ansprüche, **dadurch gekennzeichnet, dass** das Herstellungsmaterial der röhrenförmigen Vorform (4) ein Polyamid, bevorzugt Polyamid 6 ist.

## Claims

1. A method for manufacturing a wheel (1) comprising a tubular preform manufacturing (4) step (a), which comprises casting a liquid to be polymerized in a first mold (5) and polymerizing said liquid in said first mold (5) so as to be solidified into a tubular preform (4), with a main axis (XX'), the first mold (5) comprising a central core (6), which is centered on the main axis (XX') and which allows forming the central bore (7) of the tubular preform (4), as well as modeling cores (8) arranged substantially parallel to the main axis (XX') so as to form, in the radial thickness (E4) of the tubular preform, recesses (9) which extend axially according to the length (L4) of said tubular preform, said method comprising afterwards a cutting step (b), which comprising cutting the tubular preform (4) substantially perpendicularly to the main axis (XX') thereof, and secant to the recesses (9), so as to obtain a tubular preform section forming a rim (10), and then an overmolding step (d) which comprises placing said rim (10) in a second mold (11), concentrically with a central support member (12, 3), such as a sleeve (12) or a shaft (3), which materializes the axis of rotation (X₁, X₁') of the wheel (1) to be formed, and a polymer filling material is injected in the interstitial space (13) which is comprised radially between said central support member (12, 3) and the rim (10) so that said filling material come into contact with said central support member (12, 3) and penetrates the recesses (9) of the rim (10), and therefore creates, when solidified, an intermediate disc (14) which fastens the rim (10) to the central support member (12, 3).

2. The method according to claim 1, **characterized in that**, during the tubular preform manufacturing step (a), modeling cores (8), which are formed in one piece with the central core (6), are used so that the corresponding recesses (9) are in the form of flutes (20) dug in the radially inner surface of the tubular preform (4), and which open radially onto the central bore (7) of said tubular preform.

3. The method according to claim 2, **characterized in that** the radial depth of penetration (E20) of the flutes (20) is comprised between 0.5 mm and 3 mm and/or between 0.5 % and 3 % of the overall diameter (D10) of the rim (10).

4. The method according to any of claims 1 to 3, **characterized in that**, during the tubular preform manufacturing (4) step (a), modeling cores (8) are used, which modeling cores are formed by offset rods (21), distinct from the central core (6) and which extend parallel to the main axis (XX'), radially away from said central core (6), so that the corresponding recesses (9) are in the form of closed channels (22), integrated to the radial thickness (E4) of the tubular preform.

5. The method according to any of the preceding claims, **characterized in that** it comprises, after the cutting step (b) and before the overmolding step (d), a circular grooving step (c) which comprises producing a circular groove (23, 24) centered on the main axis (XX') and secant to the recesses (9), on the axially upper edge (10S) and/or on the axially lower edge (10I) of the rim (10).

6. The method according to claim 5, **characterized in that** the circular groove(s) (23, 24) is (are) contained radially beyond the inner radial limit of the rim (10), so as to form, in the rim (10), in the cross-section containing the main axis (XX'), constricted attachment reliefs (25), such as dovetails, which improve the radial anchorage of the intermediate disc (14) to the rim (10).

7. The method according to any of the preceding claims, **characterized in that** it includes a gear cutting step (e), subsequent to the overmolding step (d), which comprises cutting meshing teeth (2) in the radial thickness (E4) of the rim (10).

8. The method according to any of the preceding claims, **characterized in that** the material constitutive of the tubular preform (4) is a polyamide, preferably polyamide 6.
